(19) **Europäisches Patentamt**

**European Patent Office**

**Office européen des brevets**

(11) **EP 1 352 165 B1**

(12) **EUROPÄISCHE PATENTSCHRIFT**

(45) Veröffentlichungstag und Bekanntmachung des Hinweises auf die Patenterteilung:
**10.08.2005 Patentblatt 2005/32**

(51) Int Cl.⁷: **F02D 41/40**

(21) Anmeldenummer: **01986841.3**

(22) Anmeldetag: **20.12.2001**

(86) Internationale Anmeldenummer:
**PCT/DE2001/004869**

(87) Internationale Veröffentlichungsnummer:
**WO 2002/052137 (04.07.2002 Gazette 2002/27)**

(54) **VERFAHREN ZUM STEUERN EINER BRENNKRAFTMASCHINE**

METHOD FOR CONTROLLING AN INTERNAL COMBUSTION ENGINE

PROCEDE DE COMMANDE D'UN MOTEUR A COMBUSTION INTERNE

(84) Benannte Vertragsstaaten:
**DE FR**

(30) Priorität: **27.12.2000 DE 10065436**

(43) Veröffentlichungstag der Anmeldung:
**15.10.2003 Patentblatt 2003/42**

(73) Patentinhaber: **Siemens Aktiengesellschaft 80333 München (DE)**

(72) Erfinder:
- **HAPPENHOFER, Werner 92442 Wackersdorf (DE)**
- **ZHANG, Hong 93105 Tegernheim (DE)**

(56) Entgegenhaltungen:
**EP-A- 0 570 986       EP-A- 0 937 884**
**DE-A- 19 618 849       DE-A- 19 712 143**
**US-A- 4 971 011**

## Beschreibung

Die Erfindung betrifft ein Verfahren zum Steuern einer Brennkraftmaschine gemäß den Merkmalen des unabhängigen Anspruchs.

Aus der Veröffentlichung DE 197 12 143 A1 ist ein Verfahren zum Steuern einer Brennkraftmaschine bekannt, bei dem die Dauer einer Haupteinspritzung abhängig vom zeitlichen Abstand zwischen der Haupteinspritzung und einer zuvor erfolgten Voreinspritzung korrigiert wird, um Kraftstoffdruckschwankungen auszugleichen.

Aus der internationalen Veröffentlichung WO 97/36762 ist ein Verfahren zum Steuern einer Viertaktbrennkraftmaschine bekannt, bei dem aus einem Maximal-, einem Minimalwert für ein Motordrehmoment sowie aus einem Gewichtungsfaktor ein Solldrehmoment für eine Brennkraftmaschine errechnet wird. Der Gewichtungsfaktor - auch als Drehmomentfaktor bezeichnet - wird aus einer Fahrpedalstellung und einer aktuellen Drehzahl der Brennkraftmaschine abgeleitet. Die Werte für das maximale und minimale Drehmoment werden in Abhängigkeit von der Drehzahl, einem Verlustdrehmoment und weiteren Betriebsgrößen ermittelt. Das Verlustdrehmoment wiederum wird aus der Drehzahl und den genannten Betriebsgrößen errechnet.

Bei im sogenannten Magerbetrieb laufenden Brennkraftmaschinen ist es inzwischen üblich, eine kleine Menge an Kraftstoff als sog. Voreinspritzung in den Brennraum einzubringen, um insbesondere bei einem sog. Schichtladebetrieb im gesamten Brennraum ein möglichst homogenes Gemisch zu schaffen, das während des Arbeitstaktes zuverlässig und vollständig verbrennt. Zudem ist es üblich geworden, bei bereits geöffneten Auslassventilen eine geringe Menge an Kraftstoff in den Brennraum einzubringen, die sog. Nacheinspritzung. Diese nacheingespritzte Menge an Kraftstoff verbrennt dann im Abgaskrümmer und sorgt für eine signifikante Temperaturerhöhung der ausgestoßenen Verbrennungsabgase. Auf diese Weise soll insbesondere in einer Startphase der Brennkraftmaschine ein sich im Abgastrakt befindlicher katalytischer Konverter (Katalysator) schneller auf seine zur optimalen Reinigungswirkung notwendige Betriebstemperatur gebracht werden.

Bei den bekannten Verfahren zur Steuerung von Brennkraftmaschinen über die Ermittlung von Drehmomenten können diese in den jeweiligen Arbeitstakten der Viertaktbrennkraftmaschine zusätzlichen Einspritzimpulse bisher nur unzureichend berücksichtigt werden.

Ein Ziel der vorliegenden Erfindung besteht darin, eine zuverlässige Ermittlung der Drehmomente einer Brennkraftmaschine zu ermöglichen, bei der während jedes Arbeitstakts der Brennkraftmaschine mehrere Einspritzimpulse stattfinden.

Dieses Ziel der Erfindung wird erfindungsgemäß mit einem Verfahren entsprechend den Merkmalen des Hauptanspruchs gelöst.

Erfindungsgemäß wird bei einem Verfahren zum Steuern einer Brennkraftmaschine sowohl eine vor- wie auch eine nacheingespritzte Menge bei der Berechnung eines aktuellen Drehmoments berücksichtigt, indem jeweils ein zusätzlicher Faktor eingeführt wird, der in Abhängigkeit von der Phasenlage der Vor- bzw. der Nacheinspritzung zur Haupteinspritzung mit dem aktuellen Drehmoment für die Haupteinspritzung multipliziert wird und damit dem Effekt dieser zusätzlich eingespritzten Kraftstoffmengen auf den Verbrennungdruck und damit auf das Motordrehmoment Rechnung trägt.

Bei dem erfindungsgemäßen Verfahren zum Steuern einer Brennkraftmaschine mit einem Kraftstoffeinspritzsystem, bei dem jeder Kraftstoffeinspritzimpuls für einen Brennraum bei einem Arbeitstakt zum vorgesehenen Einspritzzeitpunkt neben einer Haupteinspritzmenge wenigstens eine zusätzliche Menge an voreingespritztem und/oder wenigstens eine zusätzliche Menge an nacheingespritztem Kraftstoff umfassen kann, ist vorgesehen, dass ein der Brennkraftmaschine zugeordnetes Steuerungssystem wenigstens folgende Komponenten umfasst: einen Pedalwertgeber zur Erfassung eines aktuellen Fahrpedalwerts und einen Drehzahlgeber zur Erfassung einer aktuellen Drehzahl der Brennkraftmaschine. Weiterhin ist vorgesehen, dass ein Wunschdrehmoment für das kupplungsseitige Ende einer Kurbelwelle aus dem Fahrpedalwert und aus der Drehzahl ermittelt wird, und dass wenigstens ein Stellsignal für wenigstens ein Stellglied der Brennkraftmaschine aus dem Wunschdrehmoment abgeleitet wird. Ein solches Stellsignal kann vorzugsweise ein Drosselklappenstellmotor oder dergleichen sein.

Erfindungsgemäß erfolgt bei einer voreingespritzten Kraftstoffmasse, die dem Brennraum zu einem früheren Zeitpunkt als eine Haupteinspritzmasse zugeführt wird, eine Korrektur der drehmomentbestimmenden Gesamtkraftstoffmasse, wobei in einem zugeordneten Korrekturfaktor ein Wert für eine Zeit- oder Phasendifferenz zwischen Einspritzbeginn oder Einspritzende der Voreinspritzung und Einspritzbeginn oder Einspritzende der Haupteinspritzung berücksichtigt wird. Dem entsprechend erfolgt auch bei einer nacheingespritzten Kraftstoffmasse, die dem Brennraum zu einem späteren Zeitpunkt als die Haupteinspritzmasse zugeführt wird, eine Korrektur der drehmomentbestimmenden Gesamtkraftstoffmasse, wobei in einem zugeordneten Korrekturfaktor ein Wert für eine Zeit- oder Phasendifferenz zwischen Einspritzbeginn oder Einspritzende der Haupteinspritzung und Einspritzbeginn oder Einspritzende der Nacheinspritzung berücksichtigt wird. Typischerweise wird bei dem Korrekturfaktor jeweils der Einspritzbeginn der unterschiedlichen Einspritzimpulse berücksichtigt. Ebenso möglich ist es aber, bspw. das Einspritzende der Voreinspritzung und den Einspritzbeginn der Haupteinspritzung zu berücksichtigen.

In einer bevorzugten Ausgestaltung des erfindungsgemäßen Verfahrens ist vorgesehen, dass in dem der Brennkraftmaschine zugeordneten Steuerungssystem zusätzlich ein aktueller Wert für einen Luftmassenstrom erfasst wird. Da bisher ein Kraftstoffmassenstrom üblicherweise nicht direkt gemessen wird, wird der aktuelle Wert für den Kraftstoffmassenstrom, der eine relevante Messgröße für das Verfahren darstellt, aus dem Luftmassenstrom hergeleitet, ggf. unter Berücksichtigung eines Kennfelds.

Neben dem Fahrerwunsch, der aus der aktuellen Stellung des Fahrpedals abgeleitet wird, gibt es bei bekannten Steuerungsverfahren weitere drehmomentbestimmende bzw. anfordernde Einflussgrößen. Eine solche Einflussgröße kann bspw. eine Drehmomentanforderung einer an sich bekannten Fahrgeschwindigkeitsregelung oder eine Drehmomentanforderung einer an sich bekannten Schlupfverhinderungsregelung (sog. ASR bzw. Anti-Schlupf-Regelung) sein. Bei einem ASR-System erfolgt typischerweise eine Erfassung einer aktuellen Raddrehzahl sowie ein Vergleich mit einer Istgeschwindigkeit des Fahrzeugs. Bei signifikanten Abweichungen wird eine Reduzierung eines Solldrehmoments und ggf. darüber hinaus ein Bremseingriff am einzelnen Rad generiert. Eine weitere Drehmomentanforderung kann bspw. von einem sog. ESP-System ("elektronisches Stabilitäts-Programm") generiert werden. Bevorzugt werden diese drehmomentbestimmenden Einflussgrößen mittels Zuordnungsvorschriften von Kennfeldern berücksichtigt.

In einer bevorzugten Weiterbildung des erfindungsgemäßen Verfahrens wird für die Korrektur der ermittelten Gesamtkraftstoffmasse zusätzlich ein Gesamtverhältnis von Luft und Kraftstoff je Arbeitstakt berücksichtigt. Bevorzugt wird zur Berechnung eines aktuellen Drehmoments ein Korrekturfaktor berücksichtigt, der sich aus der Summe wenigstens zweier von drei Faktoren $F_1$, $F_2$ und $F_3$ zusammensetzt. Dabei ist der erste Faktor $F_1$ eine Funktion der in der Haupteinspritzung zugeführten Kraftstoffmasse: $F_1 = f_1(m_{Kft,haupt})$; der zweite Faktor $F_2$ ist eine Funktion aus dem Faktor der in der Voreinspritzung zugeführten Kraftstoffmasse sowie eines ersten Wirkungsgrades $\eta_2$, der von dem zeitlichen Abstand zwischen Vor- und Haupteinspritzung abhängt: $F_2 = f_2(m_{Kft,vor}) * \eta_2(Phase_{vor-haupt})$, was hier durch den Begriff "Phase" ausgedrückt wird. Diese Phase kann eine zeitliche Größe sein oder auch eine Winkelbeziehung ausdrücken, die eine Winkeldifferenz in Grad zwischen Vor- und Haupteinspritzung angibt. Der dritte Faktor $F_3$ ist schließlich eine Funktion aus dem Faktor der in der Nacheinspritzung zugeführten Kraftstoffmasse sowie eines Wirkungsgrades $\eta_3$, der von dem zeitlichen Abstand zwischen Haupt- und Nacheinspritzung abhängt: $F_3 = f_3(m_{Kft,nach}) * \eta_3(Phase_{haupt-nach})$. Insgesamt gilt demnach:

$$F_{eff} = f_1(m_{Kft,haupt}) + f_2(m_{Kft,vor}) * \eta_2(Phase_{vor-haupt})$$

$$+ f_3(m_{Kft,nach}) * \eta_3(Phase_{haupt-nach}).$$

In einer weiteren bevorzugten Ausgestaltung des erfindungsgemäßen Verfahrens kann zur Berechnung des Drehmoments in den Wirkungsgraden $\eta_2$ und $\eta_3$ zusätzlich der Restsauerstoffanteil $\lambda$ im Abgas berücksichtigt werden, so dass sich die Beziehung wie folgt erweitert:

$$F_{eff} = f_1(m_{Kft,haupt}) + f_2(m_{Kft,vor}) * \eta_2(Phase_{vor-haupt}, \lambda) + f_3(m_{Kft,nach}) * \eta_3(Phase_{haupt-nach}, \lambda).$$

Weitere vorteilhafte Ausbildungen der Erfindung sind den abhängigen Ansprüchen sowie der Figurenbeschreibung zu entnehmen.

Nachfolgend wird die Erfindung anhand von bevorzugten Ausführungsbeispielen unter Bezugnahme auf die Zeichnung näher erläutert. Es zeigen:

Figur 1      ein schematisches Prinzipbild einer Brennkraftmaschine, bei der das erfindungsgemäße Verfahren Anwendung findet,

Figur 2      ein Blockschaltbild des erfindungsgemäßen Verfahrens zur Verdeutlichung der Ermittlung eines Wunschdrehmoments,

Figur 3      ein Blockschaltbild zur Verdeutlichung der Ermittlung eines aktuellen Drehmoments und

Figur 4      ein Blockschaltbild, bei dem das aktuelle Drehmoment und das Wuschdrehmoment verglichen werden.

In den folgenden Figurenbeschreibungen sind gleiche Teile grundsätzlich mit gleichen Bezugszeichen versehen. Für alle Blockschaltbilder gilt, dass an Summierstellen die Eingangsgrößen summiert werden und die Ausgangsgröße die Summe der Eingangsgrößen darstellen. Des weiteren gilt für alle Blockschaltbilder, dass an den Multiplizierstellen alle Eingangsgrößen multipliziert werden und dass die Ausgangsgröße jeder Multiplizierstelle dem Produkt der Eingangsgrößen entspricht.

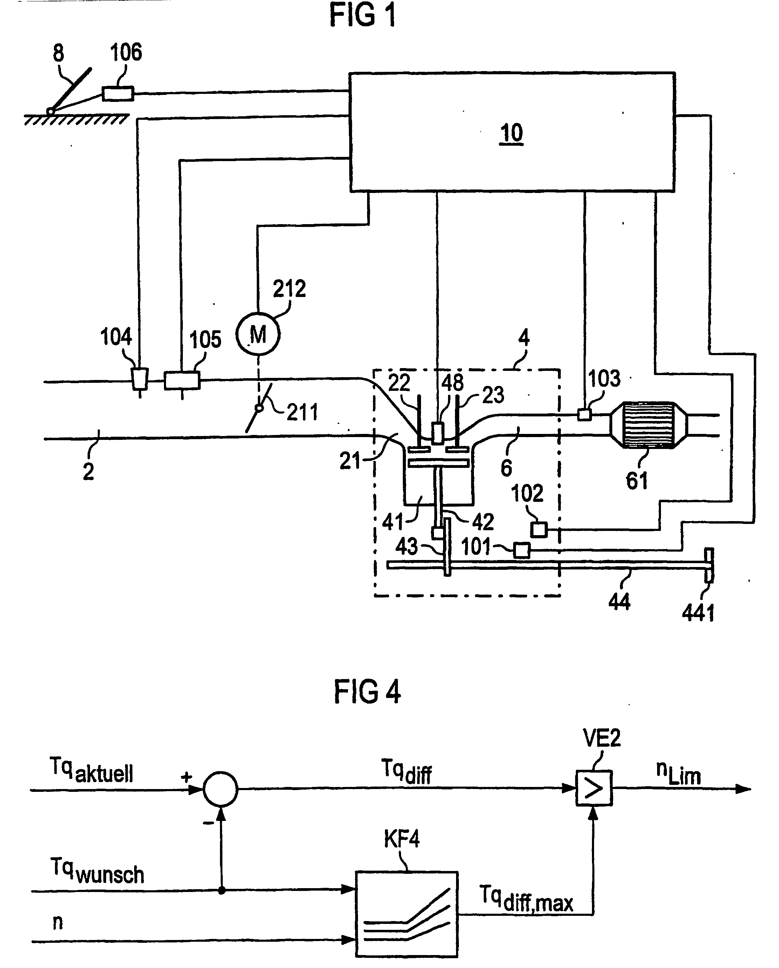

Figur 1 zeigt in einem schematischen Prinzipbild eine Brennkraftmaschine, bspw. für ein Kraftfahrzeug, bei der das erfindungsgemäße Verfahren Anwendung findet. Die Brennkraftmaschine 4 weist einen Ansaugkanal 2, einen Abgaskanal 6 und eine zentrale Rechen- und Steuereinheit 10, bei der das erfindungsgemäße Verfahren angewendet wird, sowie weitere Komponenten auf. Der Ansaugkanal 2 mündet in einen Einlasskanal 21, an dessen Mündung in einen Brennraum 41 ein Einlassventil 22 vorgesehen ist. Aus Gründen der besseren Übersichtlichkeit ist dabei nur ein einzelner Brennraum 41 der Brennkraftmaschine 4 dargestellt. Im Brennraum 41 ist ein längs verschiebbarer Kolben 42 angeordnet, der über eine Pleuelstange 43 mit einer Kurbelwelle 44 verbunden ist. Ein Drehzahlsensor 101 ist derart in der Brennkraftmaschine 4 angeordnet, dass damit die Drehzahl der Kurbelwelle 44 erfasst werden kann.

Die Kurbelwelle 44 weist an einem freien Ende einen Kupplungsflansch 441 auf, an dem eine nicht näher dargestellte Kupplung oder ein nicht dargestellter Drehmomentwandler eines Automatikgetriebes angeordnet sein kann. Das freie Ende wird im folgenden alternativ als kupplungsseitiges Ende bezeichnet. Im folgenden wird für den Kupplungsflansch 441 und die Kupplung zusammenfassend der Begriff Kupplung 441 verwendet.

In den Brennraum 41 der Brennkraftmaschine 4 ragt eine Einspritzvorrichtung 48, die bspw. Als Einspritzdüse mittig im Kopf des Brennraums 41 angeordnet sein kann. Diese Einspritzvorrichtung 48 ist in der Lage, bei jedem Arbeitstakt der Brennkraftmaschine 4 in einem oder mehreren Einspritzimpulsen Kraftstoff in den Brennraum einzuspritzen. Die größte Menge an Kraftstoff wird während einer Haupteinspritzung in den Brennraum 41 eingebracht; diese Haupteinspritzung ist in erster Linie für den Verbrennungsdruck auf den Kolben 42 und damit für das Motordrehmoment verantwortlich. Eine Voreinspritzung und eine Nacheinspritzung, bei denen jeweils relativ geringe Mengen an zusätzlichem Kraftstoff eingespritzt werden, tragen dagegen wenig zum Motordrehmoment bei.

In den Brennraum 41 der Brennkraftmaschine 4 ragt weiterhin eine hier nicht dargestellte Zündvorrichtung, bspw. in Form einer an sich bekannten sog. Zündkerze, deren Elektroden sich im dargestellten Prinzipbild mittig in der oberen Stirnseite des Brennraums 41 befinden. Alternativ können in jedem Brennraum auch mehrere Zündvorrichtungen vorgesehen sein, die in diesem Fall für eine kontrollierte Zündung von zündfähigem Luft-Kraftstoff-Gemisch an mehreren Stellen gleichzeitig sorgen. An einer Auslassöffnung des Brennraums 41 ist ein Auslassventil 23 angeordnet. Zudem weist die Brennkraftmaschine 4 einen öltemperatursensor 102 auf, der an geeigneter Stelle angebracht ist, und von dem eine Motortemperatur erfasst wird. Im Abgaskanal 6 ist zudem ein sog. Lambdasensor 103 zur Messung des Restsauerstoffanteils im Abgas sowie ein Katalysator 61 angeordnet.

Im Ansaugkanal 2 ist ein Lufttemperatursensor 104 und ein Luftmassensensor 105 stromaufwärts einer Drosselklappe 211 vorgesehen. Ein elektromechanischer Aktor - im folgenden als Drosselklappensteller 212 bezeichnet - wirkt auf die Drosselklappe 211 ein und bestimmt deren Öffnungsgrad. Ein Pedalwertgeber 106 erfasst eine Stellung eines Fahrpedals 8, mittels dessen der Fahrer einen aktuellen Fahrerwunsch vorgeben kann.

Die zentrale Rechen- und Steuereinheit 10 ist elektrisch leitend mit Sensoren und Stellantrieben, die jeweils Stellgliedern zugeordnet sind, verbunden. Sensoren stellen bspw. der Drehzahlsensor 101, der Öltemperatursensor 102, der Lambdasensor 103, der Lufttemperatursensor 104, der Luftmassensensor 105 und der Pedalwertgeber 106 dar. Es können aber ggf. noch weitere Sensoren ausser den in der Figur 1 dargestellten vorhanden sein. So kann bspw. auch ein Saugrohrdrucksensor vorhanden sein, wobei dann ggf. auf den Luftmassenmesser 12 verzichtet werden kann. Ebenso kann zum Beispiel ein Temperatursensor zum Erfassen der Kühlwassertemperatur vorgesehen sein. Die Sensoren erfassen die Betriebsgrößen der Brennkraftmaschine 4. Die Messsignale der Sensoren stellen Eingangsgrößen für die zentrale Rechen- und Steuereinheit 10 dar.

Stellgeräte umfassen jeweils einen Stellantrieb und ein Stellglied. Der Stellantrieb ist ein elektromotorischer Antrieb, ein elektromotorischer Abtrieb, ein mechanischer Antrieb oder ein weiterer dem Fachmann bekannter Antrieb. Die Stellglieder sind als Drosselklappe 211, als Einspritzvorrichtung 48, als Zündvorrichtung 46, als ein nicht dargestellter Umschalter zwischen zwei verschiedenen Saugrohrlängen oder als eine nicht dargestellte Vorrichtung zum Verstellen des Hubverlaufs, des Hubbeginns oder des Hubendes eines Motorventils ausgebildet. Auf die Stellgeräte wird im folgenden jeweils mit dem zugeordneten Stellglied Bezug genommen.

Die Ausgangsgrößen der zentralen Rechen- und Steuereinheit 10 entsprechen den Steuersignalen für die Stellglieder. Abhängig von den zugeführten Eingangsgrößen bildet die zentrale Rechen- und Steuereinheit 10 entsprechend ihrer Programme Steuersignale für die Stellglieder.

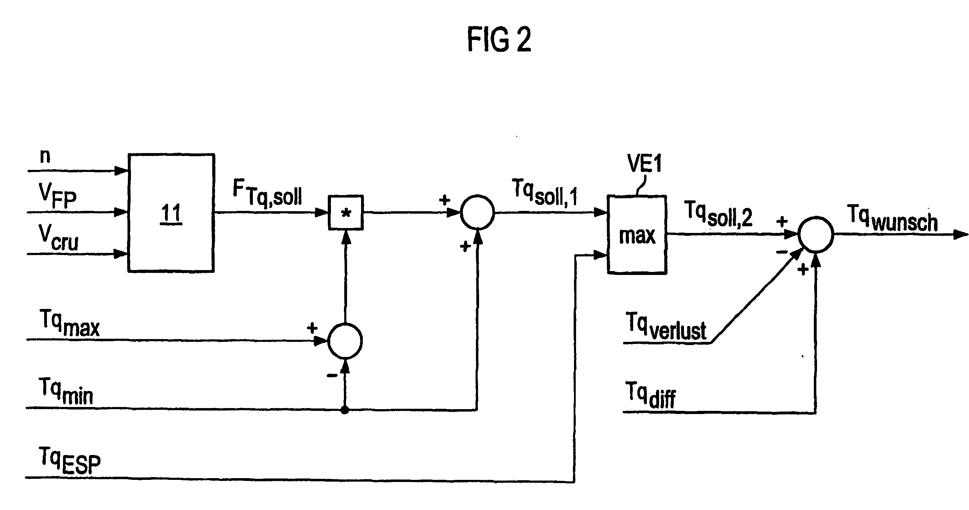

Im Blockschaltbild von Figur 2 ist das erfindungsgemäße Verfahren zum Steuern der Brennkraftmaschine dargestellt. Dabei wird verdeutlicht, wie aus verschiedenen Eingangsgrößen ein Wunschdrehmoment $Tq_{wunsch}$ errechnet wird, das einem aktuellen Fahrerwunsch entspricht, den dieser durch die Stellung des Fahrpedals 8 - übermittelt über den Pedalwertgeber 106 - an die zentrale Rechen- und Steuereinheit 10 übermittelt. In einem Steuerblock 11 der zentralen Rechen- und Steuereinheit 10 wird in Abhängigkeit von einem Pedalwert $V_{FP}$ des Pedalwertgebers 106, einer Drehzahl n der Kurbelwelle 44 und einem Stellwert $V_{cru}$ eines an sich bekannten Fahrgeschwindigkeitsreglers ein Drehmomentfaktor $F_{Tq,soll}$ gebildet. Der Drehmomentfaktor $F_{Tq,soll}$ stellt eine dimensionslose Größe mit einem Wertebereich zwischen 0 und 1 dar. Neben diesen drei erwähnten Eingangsgrößen ($V_{FP}$, n, $V_{cru}$) können ggf. weitere drehmomentbeeinflussende Eingangsgrößen wie bspw. ein Steuersignal einer an sich bekannten Antriebsschlupfregelung oder eines sog. ESP-Systems im Steuerblock 11 berücksichtigt und verarbeitet werden.

Ein maximales Drehmoment $Tq_{max}$ stellt wie alle anderen Größen in den Blockschaltbildern eine Rechengröße dar. Das maximale Drehmoment $Tq_{max}$ entspricht dem maximalen Drehmoment, das an der Kupplung 441 von der Brennkraftmaschine zur Verfügung gestellt werden kann. Ein minimales Drehmoment $Tq_{min}$, das an der Kupplung 441 der Brennkraftmaschine zur Verfügung gestellt werden kann, kann zum Bremsen des Fahrzeugs genutzt werden, sofern es einen negativen Wert aufweist. Das maximale Drehmoment $Tq_{max}$ und negative minimale Drehmoment $Tq_{min}$ werden summiert und das resultierende Summensignal mit dem Drehmomentfaktor $F_{Tq,soll}$ multipliziert. Zum daraus resultierenden Ausgangssignal wird anschließend das minimale Drehmoment $Tq_{min}$ addiert. Die daraus resultierende Ausgangsgröße bildet ein erstes Solldrehmoment $Tq_{soll,1}$.

Dieses erste Solldrehmoment $Tq_{soll,1}$ wird in einer nachgeschalteten ersten Vergleichereinheit VE1 mit verschiedenen anderen Größen verglichen, die einen abweichenden Drehmomentwunsch repräsentieren. In der Figur 2 ist als eine solche Größe nur beispielhaft ein Drehmomentwunsch $Tq_{ESP}$ von einem sog. "ESP (elektronisches Stabilitäts-Programm")-System eingezeichnet. Es sind aber weitere Eingangsgrößen denkbar, die in die erste Vergleichereinheit VE1 eingespeist werden, und aus denen der jeweilige Maximalwert das Ausgangssignal - ein zweites Solldrehmoment $Tq_{soll,2}$ - bildet. Eine solche Eingangsgröße ist bspw. ein Signal eines sog. ASR("Anti-Schlupf-Regelung")-Systems. Von diesem Ausgangssignal für das zweite Solldrehmoment $Tq_{soll,2}$ wird in einer nachgeschalteten Summierstelle ein Verlustdrehmoment $Tq_{verlust}$ subtrahiert sowie ein - später genauer definiertes - Differenzdrehmoment $Tq_{diff}$ addiert. Das resultierende Summensignal bildet schließlich ein Wuschdrehmoment $Tq_{wunsch}$, das einen aktuellen Fahrerwunsch - ggf. ergänzt durch Wunschgrößen von Fahrerassistenzsystemen - repräsentiert. Aus diesem Wunschdrehmoment $Tq_{wunsch}$ kann dann vorzugsweise mittels Kennfeldern sowie in Abhängigkeit von der aktuellen Motordrehzahl n ein Luftmassensollwert bzw. ein entsprechendes Steuersignal für den Drosselklappensteller 212 sowie für die Einspritzvorrichtung 48 gebildet werden.

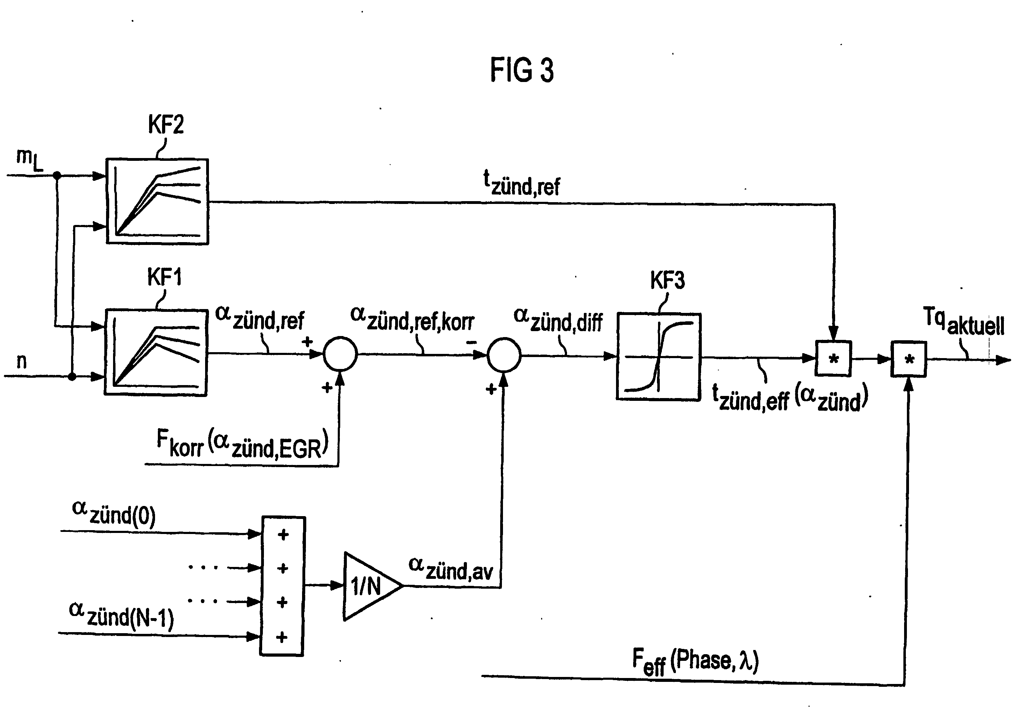

In dem folgenden Blockschaltbild der Figur 3 ist dargestellt, wie aus verschiedenen Eingangsgrößen ein aktuelles Drehmoment $Tq_{aktuell}$ ermittelt wird, das anschließend mit dem jeweiligen Wunschdrehmoment $Tq_{wunsch}$ verglichen werden kann. Der Motordrehzahl n und einem vom Luftmassensensor 105 (vgl. Figur 1) gemessenen Wert für eine innerhalb einer vorgegebenen Zeiteinheit geförderten Luftmasse $m_L$ wird in einem Kennfeld KF1 ein Referenzzündwinkel $\alpha_{zünd,ref}$ zugeordnet, der in einer anschließenden Summierstelle zu einem Korrekturfaktor für den Zündwinkel $F_{korr}(\alpha_{zünd,EGR})$, der aus der Steuerung einer Abgasrückführung (EGR) resultiert, addiert wird. Der Summenwert dieser Summierstelle bildet den korrigierten Referenzzündwinkel $\alpha_{zünd,ref,korr}$. Aus der Summe eines Zündwinkels zu einem Zeitpunkt Null $\alpha_{zünd}(0)$ und weiteren Werten für den Zündwinkel für vorangegangene Verbrennungstakte bis hin zu einem Wert für den Zündwinkel beim (N-1)ten Verbrennungstakt $\alpha_{zünd}(N-1)$, die anschließend durch die Anzahl N der betrachteten Zyklen geteilt wird, wird ein Durchschnittswert $\alpha_{zünd,av}$ für den Zündwinkel gebildet. Dieser Durchschnittswert $\alpha_{zünd,av}$ für den Zündwinkel der N letzten Verbrennungstakte wird in einer Summierstelle mit dem negativen korrigierten Referenzzündwinkel $\alpha_{zünd,ref,korr}$ addiert und die Differenz - der Differenzzündwinkel $\alpha_{zünd,ref,korr}$ - in ein Kennfeld KF3 eingespeist. Im Kennfeld KF3 wird jedem Wert für den Differenzzündwinkel $\alpha_{zünd,ref,korr}$ ein bestimmter Wert für einen effektiven Zündzeitpunkt $t_{zünd,eff}(\alpha_{zünd})$ zugeordnet.

Weiterhin wird der Motordrehzahl n und dem Wert für die Luftmasse $m_L$ in einem Kennfeld KF2 ein Referenzzündzeitpunkt $t_{zünd,ref}$ zugeordnet, der mit dem effektiven Zündzeitpunkt $t_{zünd,eff}(\alpha_{zünd})$ multipliziert wird. Das Ausgangssignal dieser Multiplizierstelle wird schließlich, um zu dem aktuellen Drehmoment $Tq_{aktuell}$ zu gelangen, mit einem dimensionslosen Faktor $F_{eff}(Phase,\lambda)$ multipliziert. Mit diesem dimensionslosen Faktor $F_{eff}(Phase,\lambda)$ sind jeweils geringe Mengen an vor- und nacheingespritztem Kraftstoff sowie deren Einspritzzeitpunkte und ggf. auch deren Beiträge zum Luft-Kraftstoff-Verhältnis $\lambda$ berücksichtigt. Die Berücksichtigung des Luft-Kraftstoff-Verhältnisses $\lambda$ - gemessen wird hierbei der Restsauerstoffanteil im Abgas - ist allerdings nur optional und für die Funktion der Steuerung nicht zwingend notwendig; in diesem Fall wäre der Faktor $F_{eff}(Phase)$ nur von der Phasenlage der Vor- und Haupteinspritzung bzw. der Haupt- und Nacheinspritzung zueinander abhängig.

Der Faktor $F_{eff}(Phase,\lambda)$ bwz. $F_{eff}(Phase)$ setzt sich typischerweise aus der Summe der folgenden drei Komponenten zusammen:

$$F_{eff} = F_1 + F_2 + F_3,$$

wobei der erste Faktor $F_1$ eine Funktion der während des Hauptimpulses eingespritzten Kraftstoffmasse $m_{Kft,haupt}$ ist:

$$F_1 = f_1(m_{Kft,haupt}).$$

Der zweite Faktor $F_2$ wird aus einer Funktion aus der Masse an voreingespritztem Kraftstoff $m_{Kft,vor}$ sowie

einem Wirkungsgrad $\eta_2$ gebildet, der von der Phasendifferenz zwischen Vor- und Haupteinspritzimpuls (z.B. in Winkelgraden oder in Millisekunden) und/oder vom Restsauerstoffanteil $\lambda$ im Abgas abhängt:

$$F_2 = f_2(m_{Kft,vor}) * \eta_2(Phase_{vor-haupt}, \lambda).$$

Der dritte Faktor $F_3$ wird aus einer Funktion aus der Menge an nacheingespritztem Kraftstoff $m_{Kft,nach}$ sowie einem Wirkungsgrad $\eta_3$ gebildet, der von der Phasendifferenz zwischen Haupt- und Nacheinspritzimpuls (z.B. in Winkelgraden oder in Millisekunden) und/oder vom Restsauerstoffanteil $\lambda$ im Abgas abhängt:

$$F_3 = f_3(m_{Kft,nach}) * \eta_3(Phase_{haupt-nach}, \lambda).$$

Der Ausgang dieser weiteren Multiplizierstelle bildet schließlich das aktuelle Drehmoment $Tq_{aktuell}$.

Anhand des Blockschaltbildes der Figur 4 wird verdeutlicht, wie aus dem Vergleich des aktuellen Drehmoments $Tq_{aktuell}$ (vgl. Figur 3) und des Wunschdrehmoments $Tq_{wunsch}$ (vgl. Figur 2) ein Grenzwert $n_{Lim}$ für die aktuelle Drehzahl errechnet wird. Dabei wird aus dem aktuellen Drehmoment $Tq_{aktuell}$ und dem negativen Wunschdrehmoment $Tq_{wunsch}$ ein Differenzdrehmoment $Tq_{Diff}$ gebildet. Zudem wird aus dem Wunschdrehmoment $Tq_{wunsch}$ und der aktuellen Motordrehzahl n in einem Kennfeld KF4 ein maximales Differenzdrehmoment $Tq_{Diff,max}$ gebildet. Aus dem größeren dieser beiden Werte für das Differenzdrehmoment $Tq_{Diff}$ und für das maximale Differenzdrehmoment $Tq_{Diff,max}$ wird in der Vergleichereinheit VE2 ein Maximalwert für die maximal zulässige Drehzahl $n_{Lim}$ gebildet.

Anstatt die vor- und nacheingespritzte Kraftstoffmassen $m_{Kft,vor}$, $m_{Kft,nach}$ mit einem Faktor ($F_{eff}(Phase,\lambda)$; vgl. Figur 3) zu berücksichtigen, ist es ebenso möglich und sinnvoll, für jede der genannten drei Komponenten (Vor-, Haupt- und Nacheinspritzung) das aktuelle Drehmoment getrennt zu berechnen und diese Werte anschließend zu summieren:

$$Tq_{aktuell,ges} = \Sigma(Tq_{aktuell,vor} + Tq_{aktuell,haupt} + Tq_{aktuell,nach}),$$

wobei in diesem Fall das Rechenmodell entsprechend Figur 3 dahingehend zu modifizieren ist, dass im Faktor $F_{eff}$ (Phase,$\lambda$) nur der jeweilige Kraftstoffmassenanteil, dessen Drehmomenteffekt berechnet werden soll, berücksichtigt wird.

Die Erfindung beschränkt sich in ihrer Ausführung nicht auf die zuvor beschriebenen bevorzugten Ausführungsbeispiele; vielmehr sind mehrere Varianten denkbar, die alleine durch die folgen den Ansprüche beschränkt sind.

**Patentansprüche**

1. Verfahren zum Steuern einer Brennkraftmaschine (4) mit einem Kraftstoffeinspritzsystem, bei dem jeder Kraftstoffeinspritzimpuls für einen Brennraum (41) bei einem Arbeitstakt zum vorgesehenen Einspritzzeitpunkt.neben einer Haupteinspritzmenge wenigstens eine zusätzliche Menge an voreingespritztem und/oder wenigstens eine zusätzliche Menge an nacheingespritztem Kraftstoff umfassen kann, wobei ein der Brennkraftmaschine (4) zugeordnetes Steuerungssystem folgendes umfasst:

   - einen Pedalwertgeber (106) zur Erfassung eines aktuellen Fahrpedalwerts ($V_{FP}$) und
   - einen Drehzahlgeber (101) zur Erfassung einer aktuellen Drehzahl (n) der Brennkraftmaschine,
   - wobei ein Wunschdrehmoment ($Tq_{wunsch}$) für das kupplungsseitige Ende einer Kurbelwelle (44) aus dem Fahrpedalwert ($V_{FP}$) und aus der Drehzahl (n) ermittelt wird, und
   - wobei wenigstens ein Stellsignal für wenigstens ein Stellglied der Brennkraftmaschine aus dem Wunschdrehmoment ($Tq_{wunsch}$) abgeleitet wird,

   **dadurch gekennzeichnet,**

   - **dass** bei einer voreingespritzten Kraftstoffmasse ($m_{Kft,vor}$), die dem Brennraum (41) zu einem früheren Zeitpunkt als eine Haupteinspritzmasse ($m_{Kft,haupt}$) zugeführt wird, eine Korrektur der drehmomentbestimmenden Gesamtkraftstoffmasse ($m_{Kft,gas}$) mit einem Korrekturfaktor ($F_{eff}$) erfolgt, wobei in dem Korrekturfaktor ($F_{eff}$) ein Wert für eine Zeit- oder Phasendifferenz zwischen Einspritzbeginn oder Einspritzende der Voreinspritzung und Einspritzbeginn oder Einspritzende der Haupteinspritzung berücksichtigt wird, und

- **dass** bei einer nacheingespritzten Kraftstoffmasse ($m_{Kft,nach}$), die dem Brennraum (41) zu einem späteren Zeitpunkt als die Haupteinspritzmasse ($m_{Kft,haupt}$) zugeführt wird, eine Korrektur der drehmomentbestimmenden Gesamtkraftstoffmasse ($m_{Kft,ges}$) mit einem Korrekturfaktor ($F_{eff}$) erfolgt, wobei in dem Korrekturfaktor ($F_{eff}$) ein Wert für eine Zeit- oder Phasendifferenz zwischen Einspritzbeginn oder Einspritzende der Haupteinspritzung und Einspritzbeginn oder Einspritzende der Nacheinspritzung berücksichtigt wird.

2. Verfahren nach Anspruch 1, **dadurch gekennzeichnet, dass** in dem der Brennkraftmaschine (4) zugeordneten Steuerungssystem zusätzlich ein aktueller Wert für einen Luftmassenstrom ($m_L$) erfasst wird.

3. Verfahren nach Anspruch 1 oder 2, **dadurch gekennzeichnet, dass** in dem der Brennkraftmaschine (4) zugeordneten Steuerungssystem zusätzlich ein aktueller Wert für einen Kraftstoffmassenstrom ($m_{Kft}$) ermittelt oder hergeleitet wird.

4. Verfahren nach einem der Ansprüche 1 bis 3, **dadurch gekennzeichnet, dass** zur Ermittlung des Wunschdrehmoments ($Tq_{wunsch}$) für das kupplungsseitige Ende der Kurbelwelle (44) zusätzlich wenigstens ein Stellwert einer drehmomentanfordernden Stelleinheit berücksichtigt wird.

5. Verfahren nach Anspruch 4, **dadurch gekennzeichnet, dass** zur Ermittlung des Wunschdrehmoments ($Tq_{wunsch}$) für das kupplungsseitige Ende der Kurbelwelle (44) zusätzlich ein Stellwert ($V_{cru}$) einer Fahrgeschwindigkeitsregelung und/oder ein Drehmomentwunsch ($Tq_{ESP}$) eines ESP-Systems und/oder ein Drehmomentwunsch ($Tq_{ASR}$) eines ASR-Systems berücksichtigt wird.

6. Verfahren nach einem der vorstehenden Ansprüche, **dadurch gekennzeichnet, dass** das Wunschdrehmoment ($Tq_{wunsch}$) mittels einer Zuordnungsvorschrift wenigstens eines Kennfeldes ermittelt wird.

7. Verfahren nach einem der vorstehenden Ansprüche, **dadurch gekennzeichnet, dass** für die Korrektur der ermittelten Gesamtkraftstoffmasse ($m_{Kft,ges}$) zusätzlich ein Gesamtverhältnis von Luft und Kraftstoff je Arbeitstakt berücksichtigt wird.

8. Verfahren nach Anspruch 7, **dadurch gekennzeichnet, dass** die Korrektur der ermittelten Gesamtkraftstoffmasse ($m_{Kft,ges}$) mittels einer Zuordnungsvorschrift wenigstens eines Kennfeldes ermittelt wird.

9. Verfahren nach einem der vorstehenden Ansprüche, **dadurch gekennzeichnet, dass** zur Berechnung eines aktuellen Drehmoments ($Tq_{aktuell}$) der Korrekturfaktor ($F_{eff}$) berücksichtigt wird, der sich aus der Summe dreier Faktoren ($f_1$, $f_2$, $f_3$) zusammensetzt, wobei gilt:

$$F_{eff} = f_1(m_{Kft,haupt}) + f_2(m_{Kft,vor}) * \eta_2(Phase_{vor-haupt})$$

$$+ f_3(m_{Kft,nach}) * \eta_3(Phase_{haupt-nach}).$$

10. Verfahren nach einem der vorstehenden Ansprüche, **dadurch gekennzeichnet, dass** zur Berechnung eines aktuellen Drehmoments ($Tq_{aktuell}$) der Korrekturfaktor ($F_{eff}$) berücksichtigt wird, der sich aus der Summe dreier Faktoren ($f_1, f_2, f_3$) zusammensetzt, wobei gilt :

$$F_{eff} = f_1(m_{Kft,haupt}) + f_2(m_{Kft,vor}) * \eta_2(Phase_{vor-haupt}, \lambda)$$

$$+ f_3(m_{Kft,nach}) * \eta_3(Phase_{haupt-nach}, \lambda).$$

**Claims**

1. Method for controlling an internal combustion engine (4) having a fuel-injection system, wherein each fuel injection pulse for a combustion chamber (41) during a working stroke can include at least one additional quantity of pre-injected and/or at least one additional quantity of post-injected fuel in addition to a main injection quantity at the intended injection instant, in which method a control system assigned to the internal combustion engine (4) includes the following:

- a pedal value sensor (106) for capturing a current accelerator pedal value ($V_{FP}$) and
- a rotational speed sensor (101) for capturing a current rotational speed (n) of the internal combustion engine,
- in which method a preferred torque ($Tq_{preferred}$) for the clutch-side end of a crankshaft (44) is determined from the accelerator pedal value ($V_{FP}$) and from the rotational speed (n), and
- in which method at least one actuating signal for at least one actuator of the internal combustion engine is derived from the preferred torque ($Tq_{preferred}$),

**characterised in that**

- in the case of a pre-injected fuel mass ($m_{fuel,pre}$) which is supplied to the combustion chamber (41) at an earlier instant than a main-injection mass ($m_{fuel,main}$), a correction to the torque-determining total fuel mass ($m_{fuel,tot}$) is carried out using a correction factor ($F_{eff}$), wherein a value for a time or phase difference between injection start or injection end of the pre-injection and injection start or injection end of the main injection is taken into consideration in the correction factor ($F_{eff}$), and
- in the case of a post-injected fuel mass ($m_{fuel,post}$) which is supplied to the combustion chamber (41) at a later instant than the main-injection mass ($m_{fuel,main}$), a correction to the torque-determining total fuel mass ($m_{fuel,tot}$) is carried out using a correction factor ($F_{eff}$), wherein a value for a time or phase difference between injection start or injection end of the main injection and injection start or injection end of the post-injection is taken into consideration in the correction factor ($F_{eff}$).

2. Method according to Claim 1, **characterised in that** a current value for an air mass flow ($m_L$) is additionally captured in the control system which is assigned to the internal combustion engine (4).

3. Method according to Claim 1 or 2, **characterised in that** a current value for a fuel mass flow ($m_{fuel}$) is additionally determined or derived in the control system which is assigned to the internal combustion engine (4).

4. Method according to one of Claims 1 to 3, **characterised in that** at least a regulating value of a torque-requiring regulating unit is additionally taken into consideration for determining the preferred torque ($Tq_{preferred}$) for the clutch-side end of the crankshaft (44).

5. Method according to Claim 4, **characterised in that** a regulating value ($V_{cru}$) of a travel speed regulator and/or a preferred torque ($Tq_{ESP}$) of an ESP system and/or a preferred torque ($Tq_{ASR}$) of an ASR system is additionally taken into consideration for determining the preferred torque ($Tq_{preferred}$) for the clutch-side end of the crankshaft (44).

6. Method according to one of the preceding claims, **characterised in that** the preferred torque ($Tq_{preferred}$) is determined by means of an assignment rule from at least one characteristic map.

7. Method according to one of the preceding claims, **characterised in that** an overall ratio of air and fuel per working stroke is additionally taken into consideration for the correction of the determined total fuel mass ($m_{fuel,tot}$).

8. Method according to Claim 7, **characterised in that** the correction of the determined total fuel mass ($m_{fuel,tot}$) is determined by means of an assignment rule from at least one characteristic map.

9. Method according to one of the preceding claims, **characterised in that** the correction factor ($F_{eff}$), which comprises the sum of three factors ($f_1$, $f_2$, $f_3$), is taken into consideration for calculating a current torque ($Tq_{current}$), where:

$$F_{eff} = f_1(m_{fuel,main}) + f_2(m_{fuel,pre}) * \eta_2(phase_{pre-main})$$

$$+ f_3(m_{fuel,post}) * \eta_3(phase_{main-post}).$$

10. Method according to one of the preceding claims, **characterised in that** the correction factor ($F_{eff}$), which comprises the sum of three factors ($f_1$, $f_2$, $f_3$), is taken into consideration for calculating a current torque ($Tq_{current}$), where:

$$F_{eff} = f_1(m_{fuel,main}) + f_2(m_{fuel,pre}) * \eta_2(phase_{pre-main}, \lambda)$$

$$+ f_3(m_{fuel,post}) * \eta_3(phase_{main-post}, \lambda).$$

**Revendications**

1. Procédé permettant de commander un moteur à combustion interne (4) doté d'un système d'injection de carburant dans lequel chaque impulsion d'injection de carburant pour une chambre de combustion (41) peut comprendre, lors d'une course motrice, à un point d'injection prédéfini, outre une quantité principale injectée, au moins une quantité supplémentaire de carburant préinjecté et/ou au moins une quantité supplémentaire de carburant postinjecté, un système de commande affecté au moteur à combustion interne (4) comprenant les composants suivants :

   - un capteur de valeur de pédale (106) permettant de saisir une valeur actuelle pour la pédale d'accélérateur ($V_{FP}$) et
   - un capteur de vitesse (101) permettant de saisir un nombre de tours actuel (n) du moteur à combustion interne,
   - un couple sollicité ($Tq_{wunsch}$) pour l'extrémité située côté embrayage d'un arbre à vilebrequin (44) étant déterminé à partir de la valeur de la pédale d'accélérateur ($V_{FP}$) et à partir du nombre de tours (n), et
   - au moins un signal de commande pour au moins un organe de réglage du moteur à combustion interne étant déduit du couple sollicité ($Tq_{wunsch}$),

   **caractérisé en ce qu'**
   une correction de la masse de carburant totale déterminant le couple s'effectue avec un facteur de correction ($F_{eff}$) lorsqu'une masse de carburant préinjectée ($m_{Kft,vor}$) est injectée dans la chambre de combustion (41) à un moment antérieur à celui où est injectée la masse d'injection principale ($m_{Kft,haupt}$), une valeur tenant compte d'une différence de temps ou d'une différence de phase entre le début ou la fin de la préinjection et le début ou la fin de l'injection principale étant prise en considération dans le facteur de correction ($F_{eff}$),
   une correction de la masse de carburant totale déterminant le couple ($m_{Kft,ges}$) s'effectue avec un facteur de correction ($F_{eff}$) lorsqu'une masse de carburant postinjectée ($m_{Kft,nach}$) est injectée dans la chambre de combustion (41) à un moment ultérieur à celui où est injectée la masse d'injection principale ($m_{Kft,haupt}$), une valeur tenant compte d'une différence de temps ou d'une différence de phase entre le début ou la fin de l'injection principale et le début ou la fin de la postinjection étant prise en considération dans le facteur de correction ($F_{eff}$).

2. Procédé selon la revendication 1, **caractérisé en ce qu'**une valeur actuelle pour un flux massique d'air ($m_L$) est en outre saisie dans le système de commande affecté au moteur à combustion interne (4).

3. Procédé selon la revendication 1 ou 2, **caractérisé en ce qu'**une valeur actuelle pour un flux massique de carburant ($m_{kft}$) est en outre déterminée ou déduite dans le système de commande affecté au moteur à combustion interne (4).

4. Procédé selon l'une des revendications 1 à 3, **caractérisé en ce qu'**en outre au moins une valeur de réglage d'une unité de réglage sollicitant le couple est prise en considération pour déterminer le couple sollicité ($Tq_{wunsch}$) pour l'extrémité située côté embrayage de l'arbre à vilebrequin (44).

5. Procédé selon la revendication 4, **caractérisé en ce qu'**en outre au moins une valeur de réglage ($V_{cru}$) d'un système de réglage de vitesse et/ou une sollicitation de couple ($Tq_{ESP}$) d'un système ESP et/ou une sollicitation de couple ($Tq_{ASR}$) d'un système ASR est prise en considération pour déterminer le couple sollicité ($Tq_{wunsch}$) pour l'extrémité située côté embrayage de l'arbre à vilebrequin (44).

6. Procédé selon l'une des revendications précédentes, **caractérisé en ce que** le couple sollicité ($Tq_{wunsch}$) est déterminé au moyen d'une règle d'affectation d'au moins un diagramme caractéristique.

7. Procédé selon l'une des revendications précédentes, **caractérisé en ce qu'**en outre un rapport global entre air et carburant par course motrice est pris en considération pour la correction de la masse de carburant totale déterminée ($m_{Kft,ges}$).

**8.** Procédé selon la revendication 7, **caractérisé en ce que** la correction de la masse de carburant totale ($m_{Kft,ges}$) est déterminée au moyen d'une règle d'affectation d'au moins un diagramme caractéristique.

**9.** Procédé selon l'une des revendications précédentes, **caractérisé en ce que** le facteur de correction ($F_{eff}$) se composant de la somme de trois facteurs ($f_1$, $f_2$, $f_3$) est pris en considération pour le calcul d'un couple actuel ($Tq_{aktuell}$), à savoir :

$$F_{eff} = f_1(m_{Kft,haupt}) + f_2(m_{Kft,vor}) * \eta_2(Phase_{vor-haupt}) + f_3(m_{Kft,nach}) * \eta_3(Phase_{haupt-nach}).$$

**10.** Procédé selon l'une des revendications précédentes, **caractérisé en ce que** le facteur de correction ($F_{eff}$) se composant de la somme de trois facteurs ($f_1$, $f_2$, $f_3$) est pris en considération pour le calcul d'un couple actuel ($Tq_{aktuell}$), à savoir :

$$F_{eff} = f_1(m_{Kft,haupt}) + f_2(m_{Kft,vor}) * \eta_2(Phase_{vor-haupt},\lambda) + f_3(m_{Kft,nach}) * \eta_3(Phase_{haupt-\,nach},\lambda).$$

## FIG 1

## FIG 4

FIG 2

Tq$_{wunsch}$

Tq$_{soll,2}$

VE1 — max

Tq$_{verlust}$

Tq$_{diff}$

Tq$_{soll,1}$

F$_{Tq,soll}$

11

n

V$_{FP}$

V$_{cru}$

Tq$_{max}$

Tq$_{min}$

Tq$_{ESP}$

FIG 3